# EUROPEAN PATENT SPECIFICATION

(11) **EP 4 172 403 B1**
(45) Date of publication and mention of the grant of the patent: **06.08.2025**
(21) Application number: 21739177.0
(22) Date of filing: 22.06.2021
(51) Int. Cl.: D06H 1/04, D01G 11/04, G08B 13/24, D06H 7/22

(54) **TEXTILE ARTICLE, METHOD AND SYSTEM FOR MANAGING TEXTILE INFORMATION**
TEXTILARTIKEL, VERFAHREN UND SYSTEM ZUR VERWALTUNG VON TEXTILINFORMATIONEN
ARTICLE TEXTILE, PROCÉDÉ ET SYSTÈME PERMETTANT DE GÉRER DES INFORMATIONS TEXTILES

(30) Priority: 29.06.2020 BE 202005478
(43) Date of publication of application: 03.05.2023
(73) Proprietor: Concordia Textiles NV, 8790 Waregem (BE)
(72) Inventor: BAEKELANDT, Carl, 8790 Waregem (BE); TUYTENS, Manu, 8790 Waregem (BE); INGHELBRECHT, Kurt, 8790 Waregem (BE)
(74) Representative: Brantsandpatents bv
(86) International application number: PCT/IB2021/055499
(87) International publication number: WO 2022/003487

(56) References cited:
- WO-A1-2013/189956
- WO-A1-2019/113305
- US-A1- 2020 074 521

## Description

### TECHNICAL FIELD

The invention relates to a textile article, method and system for managing information about a textile article during a life cycle of this textile article.

### PRIOR ART

Systems and methods for managing textile information during a textile article's life cycle are known in the art.

EP 3 371 743 describes a platform for managing information related to a textile article. The information can be provided in tags, such as an RFID tag or a QR code. For example, the information may relate to an indicator of the sustainability of the textile article.

There is a need in the art for systems and methods that increase the traceability of a textile article as well as facilitate subsequent processing for recycling or reuse.

WO 2013/189956 A1 discloses a textile article comprising two or more components, wherein at least one component substantially comprises a textile material, wherein at least two components are connected to each other with a connecting means, the textile article is amenable to disassembly in that the connecting means is subject to a reduction in a mechanical property upon exposure of the textile article to a disassembly treatment.

US 2020/074521 A1 discloses a digital tracing system comprising a RFID tag in combination with a database also storing data of the garment in the context of recycling of garments.

In particular, there is a need in the art for a system and method that are simple to implement, have minimal impact on consumer comfort as well as have high recyclability.

In particular, there is also a need in the art for a system and method for selectively communicating textile information to both a producer and consumer side.

The present invention aim to resolve at least some of the above-mentioned problems.

### SUMMARY OF THE INVENTION

In a first aspect, the invention relates to a textile article according to claim 1.

In a second, third and fourth aspect, the invention relates to a method for managing information about a textile article according to claims 12, 13 and 14.

In a fifth aspect, the invention relates to a system for managing information about a textile article according to claim 15.

The present invention is advantageous due to an increased traceability as well as an improved processing of a textile article before a recycling process or a reuse process. In addition, the present invention is suitable for selectively communicating textile information to a producer and consumer side.

Further advantages, embodiments and preferred embodiments of the invention are discussed below in the detailed description.

### DETAILED DESCRIPTION

The invention relates to a textile article, method and a system for managing information about a textile article. The invention was summarised in the section provided for this purpose. In the following, the invention is described in detail, and various embodiments and preferred embodiments are explained.

Unless otherwise defined, all terms used in the description of the invention, including technical and scientific terms, have the meaning as commonly understood by a person skilled in the art to which the invention pertains.

For a better understanding of the description of the invention, the following terms are explained explicitly.

In this document, 'a' and 'the' refer to both the singular and the plural, unless the context presupposes otherwise. For example, the term 'a component' as used herein means one or more than one component. A textile article comprising a component from a textile material can thus for instance be understood as a textile article comprising one or more components from a textile material.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a textile article comprising two or more components. Preferably, at least one component substantially comprising a textile material. Preferably, wherein at least two components are connected together with a connecting means. Preferably, wherein the textile article is associated with an electronic tag. Preferably, wherein the electronic tag comprises a memory. With further preference, wherein the electronic tag comprises a transmitter, a receiver and a memory. Preferably, wherein the memory of the electronic tag of the textile article comprises identification information and a plurality of product parameters. The textile article is preferably amenable to disassembly in that the connecting means is subject to a reduction in a mechanical property upon exposure of the textile article to a disassembly treatment. The product parameters provided on the memory of the electronic tag preferably comprise at least information related to the connecting means and/or the disassembly treatment.

In a second aspect, the invention relates to a method for associating information with a textile article. The textile article comprising two or more components. Preferably, at least one component of the two or more components substantially comprises a textile material. Preferably, at least two components of the two or more components are connected together with a connecting means. The method preferably comprises the step of providing an electronic tag associated with the textile article. The electronic tag preferably comprising a memory. The electronic tag preferably further comprising a transmitter, a receiver and a memory. The method preferably further comprises the step of storing identification information and a plurality of product parameters of the textile article on the memory of the electronic tag of the textile article. The textile article is preferably amenable to disassembly in that the connecting means is subject to a reduction in a mechanical property upon exposure of the textile article to a disassembly treatment. The product parameters provided on the memory of the electronic tag preferably comprise at least information related to the connecting means and/or the disassembly treatment.

In a third aspect, the invention relates to a method for obtaining information about a textile article, the textile article comprising two or more components. Preferably, at least one component of the two or more components substantially comprises a textile material. Preferably, at least two components of the two or more components are connected together with a connecting means. Preferably, wherein the textile article is associated with an electronic tag. Preferably, wherein the electronic tag comprises a memory. With further preference, wherein the electronic tag comprises a transmitter, a receiver and a memory. Preferably, wherein the memory of the electronic tag of the textile article comprises identification information and a plurality of product parameters. The method preferably further comprises the step of transmitting an electromagnetic signal to the receiver of the electronic tag of the textile article. The method preferably further comprises the step of recording a response signal to the electromagnetic signal. Preferably, the response signal is emitted by the transmitter of the electronic tag of the textile article. Preferably, the response signal comprises the identification information and the product parameter. The textile article is preferably amenable to disassembly in that the connecting means is subject to a reduction in a mechanical property upon exposure of the textile article to a disassembly treatment. The product parameters provided on the memory of the electronic tag preferably comprise at least information related to the connecting means and/or the disassembly treatment.

In a fourth aspect, the invention relates to a method for managing information about a textile article. The textile article comprising two or more components. Preferably, at least one component of the two or more components substantially comprises a textile material. Preferably, at least two components of the two or more components are connected together with a connecting means. The method preferably comprises the step of providing an electronic tag associated with the textile article. The electronic tag preferably comprising a transmitter, a receiver and a memory. The method preferably further comprises the step of storing identification information and a plurality of product parameters of the textile article on the memory of the electronic tag of the textile article. The method preferably further comprises the step of transmitting an electromagnetic signal to the receiver of the electronic tag of the textile article. The method preferably further comprises the step of recording a response signal to the electromagnetic signal. Preferably, the response signal is emitted by the transmitter of the electronic tag of the textile article. Preferably, the response signal comprises the identification information and the product parameter. The textile article is preferably amenable to disassembly in that the connecting means is subject to a reduction in a mechanical property upon exposure of the textile article to a disassembly treatment. The product parameters provided on the memory of the electronic tag preferably comprise at least information related to the connecting means and/or the disassembly treatment.

In a fifth aspect, the invention relates to a system for managing information about a textile article. The textile article comprising two or more components. Preferably, at least one component of the two or more components substantially comprises a textile material. Preferably, at least two components of the two or more components are connected together with a connecting means. The system comprises an electronic tag associated with the textile article. The electronic tag preferably comprising a transmitter, a receiver and a memory. The memory of the electronic tag preferably comprising identification information and a plurality of product parameters. The system preferably further comprising a scanning device. Preferably, the scanning device is configured to transmit an electromagnetic signal to the receiver of the electronic tag of the textile article. Preferably, the scanning device is further configured to record a response signal to the electromagnetic signal. The response signal is preferably emitted by the transmitter of the electronic tag of the textile article. Preferably, the response signal comprises the identification information and the product parameters. The textile article is preferably amenable to disassembly in that the connecting means is subject to a reduction in a mechanical property upon exposure of the textile article to a disassembly treatment. The product parameters provided on the memory of the electronic tag preferably comprise at least information related to the connecting means and/or the disassembly treatment.

A person of ordinary skill in the art will appreciate that the textile article according to a first aspect of the invention can be obtained using the method for associating information with a textile article according to a second aspect of the invention and/or the method for managing information about a textile article according to a fourth aspect of the invention. A person having ordinary skill in the art will further appreciate that information can be obtained from the textile article according to a first aspect of the invention using the method for obtaining information about a textile article according to a third aspect of the invention and/or the method for managing information about a textile article according to a fourth aspect of the invention. A person having ordinary skill in the art will further appreciate that the method for managing information about a textile article according to a fourth aspect of the invention can be performed with the system for managing information about a textile article according to a fifth aspect of the invention. In what follows, these five aspects of present invention are therefore treated together. Furthermore, each feature described above as well as below, may relate to any of these aspects, even if the feature is described in conjunction with a specific aspect of present invention.

The object of the present invention is to manage information about a textile article. In particular, managing information about a textile article comprises on the one hand associating information with the textile article and on the other hand obtaining information from the textile article. The information about the textile article relates in particular to identification information. Providing identification information on an electronic tag as described herein has the advantage that the textile article can be identified through a complete life cycle of the textile article. More specifically, the textile article can be identified through a supply chain of the textile article. Such identification and thus traceability has the advantage that the authenticity of the product can be verified at every point of the supply chain. In addition, the identification information can also be linked to a plurality of product parameters. Such a link between identification information and product parameters can for instance be made known by a manufacturer by means of a public database. This has the advantage that the textile article can be identified at the end of the life cycle and linked to a set of product parameters. Because the product parameters of the textile article do not have to be re-determined prior to a sorting process for a reuse or recycling process, the efficiency of such processes increases. The object of the present invention is therefore managing information about a textile article prior to a reuse or recycling process. Preferably, identification information and a plurality of product parameters are associated with the electronic tag. This has the advantage that the aforementioned sorting processes are not dependent on an external database. After all, according to such a preferred embodiment, the product information can be read directly from the electronic tag.

The textile article or textile product according to the present invention may refer to any article comprising two or more components, wherein at least one component of the two or more components comprises substantially a textile material. Preferably, at least one component of the two or more components is substantially made of a textile material. Textile is a term known in the art which denotes any material consisting of filaments or fibres. The textile article may in particular relate to a garment, such as for instance a protective garment such as gloves against cuts, safety clothing, bulletproof vests, etc. The textile article may refer to a textile object used in household applications such as cleaning rags, mops, sheets, blankets, tea towels, hand towels, tablecloths, handkerchiefs, etc. The textile article may refer to a textile object used in home textiles such as net curtains, curtains, carpet, floor covering, sunshades, etc. The textile article may refer to a textile object used in technical applications such as sails, tents, parachutes, screens, seat belts, ropes, etc. The textile article may relate to a textile object suitable for use as a geo-textile such as, for example, dyke protection, erosion protection, reinforcement of subsoil under roads, etc. The textile article can relate to a rubber reinforcement such as in bicycle tyres, car tyres, hoses, rubber boats, etc. The textile article may relate to a plastic reinforcement such as polyester reinforcement for boats and cars and car armour, etc. Preferably, 'textile article' refers to a garment. In particular, the garment relates to protective clothing.

The present invention involves associating an electronic tag with a textile article. The association of the electronic tag with the textile article preferably takes place during production and/or assembly of the textile article. Alternatively, the electronic tag can also be bonded to the textile after fabrication has been completed. The electronic tag can be connected to any part of the textile article. For example, in the case of a garment, the electronic tag can be connected to a sleeve, a trouser leg, a collar, a buckle, a hood, etc. For example, in the case of protective clothing, the electronic tag can be connected to a reflective strip, an environmental sensor, a body sensor, a protective strip such as a shock absorber, etc.

The electronic tag of the present invention comprises at least a memory. Preferably, the electronic tag comprises a transmitter, a receiver and a memory. The electronic tag may be a standalone tag. For example, the standalone tag can be sewn into a part of a garment, such as a trouser leg, a collar, etc. The standalone tag may be integrated into hardware. For example, such a tag can be connected to an environmental sensor, a body sensor, etc. Preferably, the electronic tag is a radio frequency identification (RFID) tag that can receive and transmit signals through a transmitter and receiver. In particular, the RFID tag may be a Near-field communication (NFC) tag.

Electronic tags as described herein and in particular RFID tags are advantageous for use according to the present invention in that no physical contact is required between a scanning device and an electronic tag. In addition, no line of sight is required between a scanning device and an electronic tag. In addition, an electronic tag can also be read from a relatively large distance by a scanning device. Such advantages considerably increase the efficiency of a sorting process because the textile articles do not have to be presented in a particular direction or shape with respect to a scanning device. Such electronic tags are further also advantageous for use according to the present invention in that dirt, water or other obstructive materials do not substantially disrupt the signal transmission between the electronic tag and a scanning device and thus cannot render the tag unreadable. In addition, counterfeiting an electronic tag such as an RFID tag, for example, is more complex than counterfeiting an optical tag such as a barcode. Consequently, product counterfeiting is made more difficult and more quickly detected.

The electronic tag of the present invention may be an active, a passive or a semi-active tag. For example, an active tag may contain tags that use batteries to power their respective circuitry during the tag interrogating process, i.e. signal exchange between a scanning device and an electronic tag. Semi-active tags may contain tags that use batteries to power their respective circuitry through part of the tag interrogating process. For example, the batteries may provide the power needed to transmit an encoded data signal to the scanner or reader in response to receiving an interrogating signal. A passive tag can rely entirely on the interrogating signal from a scanner or reader to power its circuitry. Preferably, the electronic tag is a passive tag. A passive tag is beneficial for use throughout a garment's lifetime as it does not rely on battery life. In the case where an electronic tag is connected with electronic hardware, the tag may also be an active or semi-active tag that relies on a battery associated with the electronic hardware.

The electronic tag of the present invention can operate in a different frequency range. The electronic tag can operate in a low frequency (LF) range of approximately 125 kHz. The electronic tag can operate in a high frequency (HF) range of approximately 13.56 MHz. The electronic tag can operate in an ultra high frequency (UHF) range of approximately 860 to 950 MHz. The electronic tag can operate in a microwave frequency (MW) range of about 2.45 GHz. In general, the lower the frequency range, the greater the reading range, but also the larger an antenna associated with a transmitter should be. Such tags are therefore less compact. Preferably, an electronic tag is used with a low frequency range when the electronic tag is coupled to electronic hardware, which is coupled to a textile article. After all, such a configuration makes it possible to integrate an antenna with a hardware component. Electronic tags with a higher frequency range, on the other hand, are more affected by metal and moisture. Preferably, an electronic tag is used with a high, ultra-high or microwave frequency range when the electronic tag is directly coupled to the textile article. For a general application, an electronic tag with a high frequency range is preferably used. Such tags require a relatively small antenna system and in addition are minimally affected by metal and moisture during a tag interrogating process.

According to a particular embodiment, the electronic tag is an NFC tag. Such NFC tag enables inductive coupling between an NFC transceiver and the NFC tag. Such coupling enables, for example, a two-way interaction between both elements. Such two-way interaction may comprise transmitting data in response to receiving an electromagnetic signal such as an interrogating signal, receiving data in response to transmitting an interrogating signal, receiving tag data from the tag, etc. For example, an NFC transceiver can send an interrogating signal to an NFC tag, where the tag responds by sending data to an NFC transceiver. Alternatively, the NFC transceiver functionality can be implemented using a transmitter and receiver so that an additional NFC transceiver is not required.

According to the present invention, the identification information of the textile article is stored on the memory of the electronic tag of the textile article. For example, the identification information may comprise a manufacturing ID, item name, business unit, parent company of the business unit, brand, product name, website, etc. In particular, the identification information comprises a stock keeping unit (SKU) of the textile article. Each SKU usually has a unique code or product number to identify the particular design of a product or service. Distributors can use their own codes or adopt those of the manufacturer. Different suppliers can therefore use different codes for the same article. The numbers can be chosen arbitrarily, but often parts of a product code refer to properties such as the manufacturer, product group, colours and sizes. The unique code or product number identifies a unique product or service intended for sale, including all features that distinguish the product or service from other articles and designs. The properties include the manufacturer, material, colour, size, packaging, parts, functionality, extensions, conditions, etc. In particular, the identification information comprises a globally unique item identification number, such as a GTIN (Global Trade Identification Number) and/or an SGTIN (Serialised Global Trade Identification Number). A GTIN or SGTIN number is used to uniquely and unambiguously identify a trading unit. Each product that must be distinguishable from another product will have its own GTIN. A GTIN number remains unchanged if the characteristics of that product remain unchanged.

According to the present invention, a plurality of product parameters of the textile article are stored on the memory of the electronic tag of the textile article. The product parameters can relate to any chemical property or mechanical property of the textile article. For example, the chemical properties may include information regarding a colouring or colour group, a coating or surface treatment, a material composition, etc. For example, the mechanical properties may comprise information with regard to the specific gravity, absorption coefficient, knitting technique, weaving technique, etc. For example, the mechanical properties may further comprise information regarding elasticity, tensile strength, brittleness, toughness, compressive strength, flexural strength, etc. of the fibres, filaments, yarns, threads, etc. comprised by a textile component of the textile article. The product parameters may furthermore also relate to production properties of the textile article. Examples of production properties include the chemicals used during production, water consumption, environmental impact, certificates at product level and/or manufacturer level, product category, size, etc. Preferably, the production properties include the chemicals used during production, the water consumption, the environmental impact, etc. per unit produced. According to a preferred embodiment, said product parameters comprise information relating to a composition of the textile material. By providing such information on the electronic tag, the efficiency of a sorting process, for example preceding a recycling process or reuse process, increases.

According to the present invention, the textile article is amenable to disassembly in that the connecting means in the textile article is subject to a reduction in a mechanical property upon exposure of the textile article to a disassembly treatment. Reduction in a mechanical property of the connecting means should preferably be understood as a reduction in a mechanical property of the connecting means which is substantially greater than a reduction in a mechanical property of the textile material of the textile article. Thus, the object of this property is to disassemble the various components of the garment which are connected through this connecting means. The reduction in the mechanical property preferably relates to a reduction in the breaking strength of the connecting means. The connecting means may be an adhesive, a filament, staple, or sewing thread. Preferably, the connecting means is a sewing thread. In the case of a sewing thread, the reduction in the mechanical property preferably relates to a reduced breaking strength of this sewing thread. The product parameters according to the present invention comprise at least information related to the connecting means and/or the disassembly treatment. Preferably, the product parameters comprise information regarding a material comprised by the connecting means responsible for reducing the mechanical property of the textile article. By providing such information on the electronic tag, the efficiency of sorting processes before a recycling process increases. In addition, the efficiency of the recycling process increases, because the textile articles can be disassembled. This also facilitates the subsequent separation of the components with a different material composition.

According to a preferred embodiment, the textile article is associated with a non-textile material. The non-textile material may refer to any material associated with the textile article not substantially comprising textile. Examples of non-textile materials include plastic, metal, wood, etc. In particular, the non-textile materials are one or more selected from the group comprising: a button, a zip and a label. The product parameters provided on the electronic tag preferably further comprise information regarding a composition of the non-textile material. By providing information on the electronic tag regarding a material composition of the non-textile material, the efficiency of a recycling process increases. After all, textile articles with the same or similar content can be easily identified and therefore sorted and processed together. In particular, buttons, zips and labels are extremely detrimental to the quality of regenerated textiles obtained after a recycling process. In addition, such materials, and in particular buttons and zips, are harmful to used recycling systems such as cutting devices, pin rollers, etc., among others. By providing information regarding the material composition of these non-textile materials on the electronic tag, not only does the efficiency of a recycling process increase, but also the sustainability of the process as well as the quality of the end product. With further preference, the product parameters provided on the electronic tag also further comprise information regarding a location of the non-textile material on the textile article. Such information further facilitates the sorting process. In addition, such information facilitates a recycling process and, in particular, processes in which non-textile materials and textiles are separated.

According to a preferred embodiment, the textile article is associated with an optical tag. 'Optical tag', as used herein, refers to a designation that is optically readable and comprises information related to the textile article. Examples of such optical tags include a barcode, a SKU, a QR code, a one-dimensional barcode, a two-dimensional barcode, a universal product code (UPC), etc. A scanning device suitable for reading an optical tag preferably comprises a camera module and an interfaced product information module. The camera module is suitable for capturing an image from the optical tag. The product information module is capable of decoding the captured image and determining the information comprised by the optical tag. Preferably, the scanning device is a user device. Such devices allow a user to obtain information from the optical tag throughout the life cycle of the textile article. 'User device', as used herein, is to be understood as a synonym for the term 'electrical user device' and refers to a term known in the art, which refers to a control device, a computer device or a computer system, such as, for example, a smart device, which can provide processing resources. Examples of a smart device include a desktop computer, a mobile device or smartphone, a personal digital assistant (PDA), a laptop, a tablet device or tablet, etc. Preferably, the user device is a smartphone or tablet provided with a camera module. Such devices are widespread. Preferably, the optical tag is a QR code. Scanning a QR code with a user device such as a smartphone is widespread.

According to a preferred embodiment, the optical tag comprises information relating to an environmental score of the textile article. 'Environmental score' is a term known in the art that denotes an indication of the environmental friendliness of a product, in this case the textile article. Preferably, the environmental score of the textile article is determined based on a plurality of product parameters of the textile article. For example, the product parameters for determining the environmental score can include information related to a colouring or colour group, a coating or surface treatment, a material composition, the chemicals used during production, water consumption during production, certificates at product level and/or manufacturer level, etc. Preferably, the environmental score comprises a recycling score indicating an amount of material in the textile article made from a recycled material. With further preference, the recycling score comprises an indication of a reduced environmental impact due to the amount of recycled material in the textile article. With further preference, the indication indicates a reduced water consumption due to the recycled materials in the textile article. With further preference, the indication indicates a reduced emission of a greenhouse gas by the recycled materials in the textile article. With further preference, the indication indicates a reduced energy consumption by the recycled materials in the textile article. By providing such information in an optical tag on the textile article, the traceability of the textile article throughout the life cycle of the textile article increases. In particular, such information assists a consumer in making a sustainable choice. Such information is extremely advantageous when provided on a QR code scannable by a user device such as a smartphone. Moreover, such an environmental score and a recycling score help a manufacturer to reduce the environmental impact of a textile article.

According to a preferred embodiment, the electronic tag is connected to the textile article with the connecting means. According to another preferred embodiment, the optical tag is connected to the textile article with the connecting means. According to another preferred embodiment, the non-textile material is connected to the textile article with the connecting means. Each of the aforementioned materials has a negative impact on the quality of regenerated textiles obtained after a recycling process. By connecting these materials to the textile article by means of a connecting means that shows a reduction in a mechanical property during a certain disassembly treatment, these materials can be removed from the textile article in a simple manner before a recycling process, sorting process, etc. In addition, these materials can be easily separated for reuse in this way.

According to a preferred embodiment, the connecting means is a sewing thread having an elongation at break of at least 10% and at most 35% measured according to ASTM D2256-02. According to a preferred embodiment, the connecting means is a sewing thread having a breaking strength of at least 500 cN and at most 25000 cN measured according to ASTM D2256-02. The breaking strength and the elongation or elongation at break are the important quality characteristics of a spun yarn. The strength and elongation of a yarn are important for the processability of the yarn as well as the life time of the textile made with the yarn. The inventors note that a breaking strength of at least 500 cN is required in order for the components of the textile article bonded to this sewing thread to remain bonded for a full life of the textile article. The inventors also further note that an elongation at break of at least 10% is required in order for the textile article to be industrially processed. Sewing threads with an elongation greater than 35% and/or a breaking strength greater than 25000 cN are also difficult to process industrially. After treatment of the textile article by means of a disassembly treatment, the breaking strength of the sewing thread preferably becomes substantially less than 500 cN. Consequently, this sewing thread will break causing the textile article to fall apart. According to a preferred embodiment, the connecting means is a sewing thread with a linear mass of at least 15 g per 1000 m and at most 400 g per 1000 m measured according to ASTM D1577-07. The linear mass is a measure of the fineness of a yarn. The inventors also further note that a sewing thread with a linear mass between 15 g per 1000 m and 400 g per 1000 m is required for quality finishing of the textile article.

According to a preferred embodiment, the disassembly treatment comprises one or more treatments selected from the group comprising: an electromagnetic radiation treatment, a heat treatment and an enzyme treatment.

The disassembly treatment is preferably an electromagnetic radiation treatment of the textile article, wherein the textile article is irradiated with electromagnetic radiation with a minimum energy density. Thus, the product information provided on the electronic tag preferably comprises information regarding the minimum energy density required for the electromagnetic disassembly treatment. Preferably, the connecting means is coated and/or chemically bonded with an electromagnetic radiation sensitive or conductive material which, when exposed to electromagnetic radiation, releases heat to the connecting means thereby affecting a mechanical property of the connecting means. Examples of such sensitive or conductive materials include metallic materials such as iron, aluminium, copper, gold, zinc, etc. Thus, the product information provided on the electronic tag preferably comprises information regarding the material coated or bonded with the connecting means.

The disassembly treatment is preferably a heat treatment of the textile article, wherein the textile article is heated to a minimum temperature. Thus, the product information provided on the electronic tag preferably comprises information regarding the minimum temperature required for the heat disassembly treatment. Preferably, the connecting means is a thermoplastic polymer having a melting temperature substantially lower than a melting temperature of the material to which the thermoplastic polymer, i.e. the connecting means, is bonded. Examples of suitable thermoplastic polymer materials include thermoplastic polyurethane, polyamide, polyester, polypropylene and polyolefin, etc. Thus, the product information provided on the electronic tag preferably includes information about a polymer composition of the connecting means.

The disassembly treatment is preferably an enzyme treatment of the textile article, wherein the textile article is mixed with a specific type of enzyme. Thus, the product information provided on the electronic tag preferably comprises information regarding a type of enzyme and optionally a concentration thereof required for the enzyme disassembly treatment. Preferably, the connecting means comprises a component sensitive to the enzyme treatment.

The present invention should not be construed as being limited to the embodiments described above and certain modifications or changes may be added to the examples described without having to re-evaluate the appended claims.

## Claims

1. Textile article comprising two or more components, wherein at least one component substantially comprises a textile material, wherein at least two components are connected to each other with a connecting means, wherein the textile article is associated with an electronic tag comprising a memory, preferably wherein the electronic tag comprises a transmitter, a receiver and a memory, and wherein the memory of the electronic tag of the textile article comprises identification information and a plurality of product parameters, **characterised in that** the textile article is amenable to disassembly **in that** the connecting means is subject to a reduction in a mechanical property upon exposure of the textile article to a disassembly treatment and wherein the product parameters comprise at least information regarding the connecting means and/or the disassembly treatment.

2. A textile article according to preceding claim 1, wherein the textile article is associated with a non-textile material and wherein the product parameters further comprise information relating to a composition of the non-textile material, preferably wherein the non-textile material is one or more selected from the group comprising: a button, a zip and a label.

3. A textile article according to any of the preceding claims 1 or 2, wherein said product parameters further comprise information regarding a composition of the textile material.

4. A textile article according to any of the preceding claims 1 to 3, wherein said connecting means is a sewing thread having an elongation at break of at least 10% and at most 35% according to ASTM D2256-02.

5. A textile article according to any of the preceding claims 1 to 4, wherein said connecting means is a sewing thread having a breaking strength of at least 500 cN and at most 25000 cN according to ASTM D2256-02.

6. A textile article according to any of the preceding claims 1 to 5, wherein said connecting means is a sewing thread having a linear mass of at least 15 g per 1000 m and at most 400 g per 1000 m according to ASTM D1577-07.

7. A textile article according to any of the preceding claims 1 to 6, wherein said disassembly treatment comprises one or more disassembly treatments selected from the group comprising: an electromagnetic radiation treatment, a heat treatment and an enzyme treatment.

8. A textile article according to any of the preceding claims 1 to 7, wherein said electronic tag comprises a radio frequency identification (RFID) tag.

9. A textile article according to any of the preceding claims 1 to 8, wherein the textile article is associated with an optical tag and wherein the optical tag comprises information relating to an environmental score of the textile article, preferably wherein the environmental score of the textile article is determined on the basis of product parameters.

10. A textile article according to preceding claim 9, wherein said optical tag comprises a Quick Response (QR) code.

11. A textile article according to any of the preceding claims 1 to 10, wherein said electronic tag and/or said non-textile material according to any of the preceding claims 2 to 10 and/or said optical tag according to any of the preceding claims 9 or 10 is connected to the textile article with the connecting means.

12. A method for associating information with a textile article, wherein the textile article comprises two or more components, wherein at least one component substantially comprises a textile material and wherein at least two components are joined together with a connecting means, the method comprising the steps of:
- providing an electronic tag associated with the textile article, the electronic tag comprising a memory, preferably wherein the electronic tag comprises a transmitter, a receiver and a memory; and
- storing identification information and a plurality of product parameters of the textile article on the memory of the electronic tag of the textile article;
**characterised in that** the textile article is amenable to disassembly **in that** the connecting means is subject to a reduction in a mechanical property upon exposure of the textile article to a disassembly treatment and wherein the product parameters comprise at least information relating to the connecting means and/or the disassembly treatment.

13. A method for obtaining information about a textile article, wherein the textile article comprises two or more components, wherein at least one component substantially comprises a textile material, wherein at least two components are connected to each other with a connecting means, wherein the textile article is associated with an electronic tag, wherein the electronic tag comprises a transmitter, a receiver and a memory and wherein the memory of the electronic tag of the textile article comprises identification information and a plurality of product parameters, the method comprising the steps of:
- transmitting an electromagnetic signal to the receiver of the electronic tag of the textile article; and
- recording a response signal to the electromagnetic signal, the response signal being emitted from the transmitter of the electronic tag of the textile article and the response signal comprising the identification information and the product parameters;
**characterised in that** the textile article is amenable to disassembly **in that** the connecting means is subject to a reduction in a mechanical property upon exposure of the textile article to a disassembly treatment and wherein the product parameters comprise at least information relating to the connecting means and/or the disassembly treatment.

14. A method for managing information about a textile article, wherein the textile article comprises two or more components, wherein at least one component substantially comprises a textile material and wherein at least two components are joined together with a connecting means, the method comprising the steps of:
- providing an electronic tag associated with the textile article, the electronic tag comprising a transmitter, a receiver and a memory;
- storing identification information and a plurality of product parameters of the textile article on the memory of the electronic tag of the textile article;
- transmitting an electromagnetic signal to the receiver of the electronic tag of the textile article; and
- recording a response signal to the electromagnetic signal, the response signal being emitted from the transmitter of the electronic tag of the textile article and the response signal comprising the identification information and the product parameters;
**characterised in that** the textile article is amenable to disassembly **in that** the connecting means is subject to a reduction in a mechanical property upon exposure of the textile article to a disassembly treatment and wherein the product parameters comprise at least information relating to the connecting means and/or the disassembly treatment.

15. Use of a system for managing information about a textile article for performing a method according to claim 14, the system comprising:
- an electronic tag associated with the textile article, the electronic tag comprising a transmitter, a receiver and a memory and wherein the memory of the electronic tag comprises identification information and a plurality of product parameters; and
- a scanning device configured to transmit an electromagnetic signal to the receiver of the electronic tag of the textile article; and recording a response signal to the electromagnetic signal, the response signal being emitted from the transmitter of the electronic tag of the textile article and the response signal comprising the identification information and the product parameters.

## Patentansprüche

1. Textilartikel, zwei oder mehr Komponenten umfassend, wobei mindestens eine Komponente im Wesentlichen ein Textilmaterial umfasst, wobei mindestens zwei Komponenten mit einem Verbindungsmittel miteinander verbunden sind, wobei dem Textilartikel ein elektronisches Etikett zugeordnet ist, das einen Speicher umfasst, wobei das elektronische Etikett vorzugsweise einen Sender, einen Empfänger und einen Speicher umfasst und wobei der Speicher des elektronischen Etiketts des Textilartikels Identifikationsinformationen und mehrere Produktparameter umfasst, **dadurch gekennzeichnet, dass** der Textilartikel insofern für eine Zerlegung empfänglich ist, als das Verbindungsmittel daraufhin, dass der Textilartikel einer Zerlegungsbehandlung ausgesetzt wird, einer Verringerung einer mechanischen Eigenschaft unterzogen wird, und wobei die Produktparameter mindestens Informationen bezüglich des Verbindungsmittels und/oder der Zerlegungsbehandlung umfassen.

2. Ein Textilartikel nach dem vorhergehenden Anspruch 1, wobei dem Textilartikel ein nicht-textiles Material zugeordnet ist und wobei die Produktparameter ferner Informationen bezüglich einer Zusammensetzung des nicht-textilen Materials umfassen, wobei das nicht-textile Material vorzugsweise eines oder mehreres ist, das aus der Gruppe ausgewählt ist, die einen Knopf, einen Reißverschluss oder ein Schild umfasst.

3. Ein Textilartikel nach einem der vorhergehenden Ansprüche 1 oder 2, wobei die Produktparameter ferner Informationen bezüglich einer Zusammensetzung des Textilmaterials umfassen.

4. Ein Textilartikel nach einem der vorhergehenden Ansprüche 1 bis 3, wobei das Verbindungsmittel ein Nähfaden ist, der eine Bruchdehnung gemäß ASTM D2256-02 von mindestens 10 % und höchstens 35 % aufweist.

5. Ein Textilartikel nach einem der vorhergehenden Ansprüche 1 bis 4, wobei das Verbindungsmittel ein Nähfaden ist, der eine Bruchfestigkeit gemäß ASTM D2256-02 von mindestens 500 cN und höchstens 25000 cN aufweist.

6. Ein Textilartikel nach einem der vorhergehenden Ansprüche 1 bis 5, wobei das Verbindungsmittel ein Nähfaden mit einer linearen Masse gemäß ASTM D1577-07 von mindestens 15 g pro 1000 m und höchstens 400 g pro 1000 m ist.

7. Ein Textilartikel nach einem der vorhergehenden Ansprüche 1 bis 6, wobei die Zerlegungsbehandlung eine oder mehrere Zerlegungsbehandlungen umfasst, die aus der Gruppe ausgewählt sind, die eine Behandlung mit elektromagnetischer Strahlung, eine Wärmebehandlung und eine Enzymbehandlung umfasst.

8. Ein Textilartikel nach einem der vorhergehenden Ansprüche 1 bis 7, wobei das elektronische Etikett ein RFID-Tag (Radio Frequency IDentification) umfasst.

9. Ein Textilartikel nach einem der vorhergehenden Ansprüche 1 bis 8, wobei dem Textilartikel ein optisches Etikett zugeordnet ist und wobei das optische Etikett Informationen bezüglich eines Umweltwertes des Textilartikels umfasst, vorzugsweise wobei der Umweltwert des Textilartikels auf der Basis von Produktparametern bestimmt wird.

10. Ein Textilartikel nach dem vorhergehenden Anspruch 9, wobei das optische Etikett einen QR-Code (Quick Response) umfasst.

11. Ein Textilartikel nach einem der vorhergehenden Ansprüche 1 bis 10, wobei das elektronische Etikett und/oder das nicht-textile Material nach einem der vorhergehenden Ansprüche 2 bis 10 und/oder das optische Etikett nach einem der vorhergehenden Ansprüche 9 oder 10 mit dem Verbindungsmittel mit dem Textilartikel verbunden ist.

12. Ein Verfahren zum Zuordnen von Informationen zu einem Textilartikel, wobei der Textilartikel zwei oder mehr Komponenten umfasst, wobei mindestens eine Komponente im Wesentlichen ein Textilmaterial umfasst und wobei mindestens zwei Komponenten mit einem Verbindungsmittel miteinander verbunden sind, wobei das Verfahren die folgenden Schritte umfasst:
- Bereitstellen eines elektronischen Etiketts, das dem Textilartikel zugeordnet ist, wobei das elektronische Etikett einen Speicher umfasst, wobei das elektronische Etikett vorzugsweise einen Sender, einen Empfänger und einen Speicher umfasst, und
- Speichern von Identifikationsinformationen und mehreren Produktparametern des Textilartikels in den Speicher des elektronischen Etiketts des Textilartikels;
**dadurch gekennzeichnet, dass** der Textilartikel insofern für eine Zerlegung empfänglich ist, als das Verbindungsmittel daraufhin, dass der Textilartikel einer Zerlegungsbehandlung ausgesetzt wird, einer Verringerung einer mechanischen Eigenschaft unterzogen wird, und wobei die Produktparameter mindestens Informationen bezüglich des Verbindungsmittels und/oder der Zerlegungsbehandlung umfassen.

13. Ein Verfahren zum Gewinnen von Informationen über einen Textilartikel, wobei der Textilartikel zwei oder mehr Komponenten umfasst, wobei mindestens eine Komponente im Wesentlichen ein Textilmaterial umfasst, wobei mindestens zwei Komponenten mit einem Verbindungsmittel miteinander verbunden sind, wobei dem Textilartikel ein elektronisches Etikett zugeordnet ist, wobei das elektronische Etikett einen Sender, einen Empfänger und einen Speicher umfasst und wobei der Speicher des elektronischen Etiketts des Textilartikels Identifikationsinformationen und mehrere Produktparameter umfasst, wobei das Verfahren die folgenden Schritte umfasst:
- Übertragen eines elektromagnetischen Signals an den Empfänger des elektronischen Etiketts des Textilartikels; und
- Aufzeichnen eines Antwortsignals auf das elektromagnetische Signal, wobei das Antwortsignal von dem Sender des elektronischen Etiketts des Textilartikels gesendet wird und das Antwortsignal die Identifikationsinformationen und die Produktparameter umfasst;
**dadurch gekennzeichnet, dass** der Textilartikel insofern für eine Zerlegung empfänglich ist, als das Verbindungsmittel daraufhin, dass der Textilartikel einer Zerlegungsbehandlung ausgesetzt wird, einer Verringerung einer mechanischen Eigenschaft unterzogen wird, und wobei die Produktparameter mindestens Informationen bezüglich des Verbindungsmittels und/oder der Zerlegungsbehandlung umfassen.

14. Ein Verfahren zum Verwalten von Informationen über einen Textilartikel, wobei der Textilartikel zwei oder mehr Komponenten umfasst, wobei mindestens eine Komponente im Wesentlichen ein Textilmaterial umfasst und wobei mindestens zwei Komponenten mit einem Verbindungsmittel miteinander verbunden sind, wobei das Verfahren die folgenden Schritte umfasst:
- Bereitstellen eines elektronischen Etiketts, das dem Textilartikel zugeordnet wird, wobei das elektronische Etikett einen Sender, einen Empfänger und einen Speicher umfasst;
- Speichern von Identifikationsinformationen und mehreren Produktparametern des Textilartikels in dem Speicher des elektronischen Etiketts des Textilartikels;
- Senden eines elektromagnetischen Signals an den Empfänger des elektronischen Etiketts des Textilartikels; und
- Aufzeichnen eines Antwortsignals auf das elektromagnetische Signal, wobei das Antwortsignal von dem Sender des elektronischen Etiketts des Textilartikels gesendet wird und das Antwortsignal die Identifikationsinformationen und die Produktparameter umfasst,
**dadurch gekennzeichnet, dass** der Textilartikel insofern für eine Zerlegung empfänglich ist, als das Verbindungsmittel daraufhin, dass der Textilartikel einer Zerlegungsbehandlung ausgesetzt wird, einer Verringerung einer mechanischen Eigenschaft unterzogen wird, und wobei die Produktparameter mindestens Informationen bezüglich des Verbindungsmittels und/oder der Zerlegungsbehandlung umfassen.

15. Verwendung eines Systems zum Verwalten von Informationen über einen Textilartikel zum Durchführen eines Verfahrens nach Anspruch 14, wobei das System Folgendes umfasst:
- ein elektronisches Etikett, das dem Textilartikel zugeordnet ist, wobei das elektronische Etikett einen Sender, einen Empfänger und einen Speicher umfasst und wobei der Speicher des elektronischen Etiketts Identifikationsinformationen und mehrere Produktparameter umfasst, und
- eine Scan-Vorrichtung, die dafür konfiguriert ist, ein elektromagnetisches Signal an den Empfänger des elektronischen Etiketts des Textilartikels zu senden und ein Antwortsignal auf das elektromagnetische Signal aufzuzeichnen, wobei das Antwortsignal von dem Sender des elektronischen Etiketts des Textilartikels gesendet wird und das Antwortsignal die Identifikationsinformationen und die Produktparameter umfasst.

## Revendications

1. Article textile comprenant deux composants ou plus, dans lequel au moins un composant comprend essentiellement une matière textile, dans lequel au moins deux composants sont reliés l'un à l'autre par un moyen de liaison, dans lequel l'article textile est associé à une étiquette électronique comprenant une mémoire, de préférence dans lequel l'étiquette électronique comprend un émetteur, un récepteur et une mémoire, et dans lequel la mémoire de l'étiquette électronique de l'article textile comprend des informations d'identification et une pluralité de paramètres de produit, **caractérisé en ce que** l'article textile peut être désassemblé **en ce que** le moyen de liaison est soumis à une réduction d'une propriété mécanique lors de l'exposition de l'article textile à un traitement de désassemblage et dans lequel les paramètres de produit comprennent au moins des informations concernant le moyen de liaison et/ou le traitement de désassemblage.

2. Article textile selon la revendication 1 précédente, dans lequel l'article textile est associé à un matériau non textile et dans lequel les paramètres de produit comprennent en outre des informations relatives à la composition du matériau non textile, de préférence dans lequel le matériau non textile est un ou plusieurs éléments choisis dans le groupe comprenant : un bouton, une fermeture éclair et une étiquette.

3. Article textile selon l'une quelconque des revendications précédentes 1 ou 2, dans lequel lesdits paramètres de produit comprennent en outre des informations relatives à la composition de la matière textile.

4. Article textile selon l'une quelconque des revendications précédentes 1 à 3, dans lequel ledit moyen de liaison est un fil à coudre ayant un allongement à la rupture d'au moins 10 % et d'au plus 35 % selon la norme ASTM D2256-02.

5. Article textile selon l'une quelconque des revendications précédentes 1 à 4, dans lequel ledit moyen de liaison est un fil à coudre ayant une résistance à la rupture d'au moins 500 cN et d'au plus 25000 cN selon la norme ASTM D2256-02.

6. Article textile selon l'une quelconque des revendications précédentes 1 à 5, dans lequel ledit moyen de liaison est un fil à coudre ayant une masse linéaire d'au moins 15 g par 1000 m et d'au plus 400 g par 1000 m selon la norme ASTM D1577-07.

7. Article textile selon l'une quelconque des revendications précédentes 1 à 6, dans lequel ledit traitement de désassemblage comprend un ou plusieurs traitements de désassemblage choisis dans le groupe comprenant : un traitement par rayonnement électromagnétique, un traitement thermique et un traitement enzymatique.

8. Article textile selon l'une quelconque des revendications précédentes 1 à 7, dans lequel ladite étiquette électronique comprend une étiquette d'identification par radiofréquence (RFID).

9. Article textile selon l'une quelconque des revendications précédentes 1 à 8, dans lequel l'article textile est associé à une étiquette optique et dans lequel l'étiquette optique comprend des informations relatives à un score environnemental de l'article textile, de préférence dans lequel le score environnemental de l'article textile est déterminé sur la base de paramètres de produit.

10. Article textile selon la revendication 9 précédente, dans lequel ladite étiquette optique comprend un code de réponse rapide (QR).

11. Article textile selon l'une quelconque des revendications précédentes 1 à 10, dans lequel ladite étiquette électronique et/ou ledit matériau non textile selon l'une quelconque des revendications précédentes 2 à 10 et/ou ladite étiquette optique selon l'une quelconque des revendications précédentes 9 ou 10 sont reliés à l'article textile par le moyen de liaison.

12. Procédé permettant d'associer des informations à un article textile, dans lequel l'article textile comprend deux composants ou plus, dans lequel au moins un composant comprend essentiellement une matière textile et dans lequel au moins deux composants sont assemblés par un moyen de liaison, le procédé comprenant les étapes consistant à :
- fournir une étiquette électronique associée à l'article textile, l'étiquette électronique comprenant une mémoire, de préférence dans lequel l'étiquette électronique comprend un émetteur, un récepteur et une mémoire ; et
- stocker des informations d'identification et une pluralité de paramètres de produit de l'article textile dans la mémoire de l'étiquette électronique de l'article textile ;
**caractérisé en ce que** l'article textile peut être désassemblé **en ce que** le moyen de liaison est soumis à une réduction d'une propriété mécanique lors de l'exposition de l'article textile à un traitement de désassemblage et dans lequel les paramètres de produit comprennent au moins des informations relatives au moyen de liaison et/ou au traitement de désassemblage.

13. Procédé permettant d'obtenir des informations sur un article textile, dans lequel l'article textile comprend deux composants ou plus, dans lequel au moins un composant comprend essentiellement une matière textile, dans lequel au moins deux composants sont reliés l'un à l'autre par un moyen de liaison, dans lequel l'article textile est associé à une étiquette électronique, dans lequel l'étiquette électronique comprend un émetteur, un récepteur et une mémoire et dans lequel la mémoire de l'étiquette électronique de l'article textile comprend des informations d'identification et une pluralité de paramètres de produit, le procédé comprenant les étapes consistant à :
- transmettre un signal électromagnétique au récepteur de l'étiquette électronique de l'article textile ; et
- enregistrer un signal de réponse au signal électromagnétique, le signal de réponse étant émis par l'émetteur de l'étiquette électronique de l'article textile et le signal de réponse comprenant les informations d'identification et les paramètres de produit ;
**caractérisé en ce que** l'article textile peut être désassemblé **en ce que** le moyen de liaison est soumis à une réduction d'une propriété mécanique lors de l'exposition de l'article textile à un traitement de désassemblage et dans lequel les paramètres de produit comprennent au moins des informations relatives au moyen de liaison et/ou au traitement de désassemblage.

14. Procédé permettant de gérer des informations sur un article textile, dans lequel l'article textile comprend deux composants ou plus, dans lequel au moins un composant comprend essentiellement une matière textile et dans lequel au moins deux composants sont assemblés par un moyen de liaison, le procédé comprenant les étapes consistant à :
- fournir une étiquette électronique associée à l'article textile, l'étiquette électronique comprenant un émetteur, un récepteur et une mémoire ;
- stocker des informations d'identification et une pluralité de paramètres de produit de l'article textile dans la mémoire de l'étiquette électronique de l'article textile ;
- transmettre un signal électromagnétique au récepteur de l'étiquette électronique de l'article textile ; et
- enregistrer un signal de réponse au signal électromagnétique, le signal de réponse étant émis par l'émetteur de l'étiquette électronique de l'article textile et le signal de réponse comprenant les informations d'identification et les paramètres de produit ;
**caractérisé en ce que** l'article textile peut être désassemblé **en ce que** le moyen de liaison est soumis à une réduction d'une propriété mécanique lors de l'exposition de l'article textile à un traitement de désassemblage et dans lequel les paramètres de produit comprennent au moins des informations relatives au moyen de liaison et/ou au traitement de désassemblage.

15. Utilisation d'un système de gestion d'informations sur un article textile pour effectuer un procédé selon la revendication 14, le système comprenant :
- une étiquette électronique associée à l'article textile, l'étiquette électronique comprenant un émetteur, un récepteur et une mémoire, et dans lequel la mémoire de l'étiquette électronique comprend des informations d'identification et une pluralité de paramètres de produit ; et
- un dispositif de balayage configuré pour transmettre un signal électromagnétique au récepteur de l'étiquette électronique de l'article textile ; enregistrer un signal de réponse au signal électromagnétique, le signal de réponse étant émis par l'émetteur de l'étiquette électronique de l'article textile et le signal de réponse comprenant les informations d'identification et les paramètres de produit.
